(19) Europäisches Patentamt
European Patent Office
Office européen des brevets

(11) **EP 2 208 262 B1**

(12) **FASCICULE DE BREVET EUROPEEN**

(45) Date de publication et mention de la délivrance du brevet:
**15.06.2016 Bulletin 2016/24**

(51) Int Cl.:
*G02B 6/036* (2006.01)  *H01S 3/067* (2006.01)
*H01S 3/094* (2006.01)  *H01S 3/16* (2006.01)

(21) Numéro de dépôt: **08853651.1**

(22) Date de dépôt: **07.11.2008**

(86) Numéro de dépôt international:
**PCT/FR2008/052018**

(87) Numéro de publication internationale:
**WO 2009/068800 (04.06.2009 Gazette 2009/23)**

(54) **DISPOSITIF A FIBRE OPTIQUE DOPEE AUX TERRES RARES POUR L'EMISSION OU L'AMPLIFICATION D'UN SIGNAL DANS LA BANDE "S"**

MIT SELTENEN ERDEN DOTIERTE OPTISCHE FASER ZUR EMISSION UND VERSTÄRKUNG EINES SIGNALS IM S-BAND

RARE-EARTH-DOPED FIBRE-OPTICE DEVICE FOR THE EMISSION OR AMPLIFICATION OF A SIGNAL IN THE S-BAND

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **09.11.2007 FR 0758946**

(43) Date de publication de la demande:
**21.07.2010 Bulletin 2010/29**

(73) Titulaire: **ALCATEL LUCENT**
**92100 Boulogne-Billancourt (FR)**

(72) Inventeurs:
• **SIMMONNEAU, Christian**
  **F-91620 Nozay (FR)**
• **BUROV, Ekaterina**
  **F-92100 Boulogne-Billancourt (FR)**
• **FEVRIER, Sébastien**
  **F-87100 Limoges (FR)**

(74) Mandataire: **Berthier, Karine et al**
**Alcatel-Lucent International**
**148/152, route de la Reine**
**92100 Boulogne-Billancourt (FR)**

(56) Documents cités:
**EP-A- 0 810 453      WO-A-01/88578**
**US-A1- 2004 156 401**

• **FÉVRIER S ET AL: "Very large effective area singlemode photonic bandgap fibre" ELECTRONICS LETTERS, IEE STEVENAGE, GB, vol. 39, no. 17, 21 août 2003 (2003-08-21), pages 1240-1242, XP006020907 ISSN: 0013-5194**
• **VIALE ET AL: "Modal properties of solid-core photonic bandgap fibers" PHOTONICS AND NANOSTRUCTURES, ELSEVIER, AMSTERDAM, NL, vol. 4, no. 2, mai 2006 (2006-05), pages 116-122, XP005402231 ISSN: 1569-4410**
• **S. FEVRIER ET AL.: "Low-loss singlemode large mode area all-silica photonic bandgap fiber" Optics Express Opt. Soc. America USA, vol. 14, no. 2, 23 janvier 2006 (2006-01-23), pages 562-569, XP002474543 ISSN: 1094-4087**
• **PHILIPPE ROY ET AL.: "Microstructured fibres and applications" CLEO/EUROPE - IQEC 2007. EUROPEAN CONFERENCE ON LASERS AND ELECTRO-OPTICS AND THE INTERNATIONAL QUANTUM ELECTRONICS CONFERENCE 17-22 JUNE 2007 MUNICH, GERMANY, 17 juin 2007 (2007-06-17), page 729, XP002474544 CLEO/Europe - IQEC 2007. European Conference on Lasers and Electro-Optics and the International Quantum Electronics Conference IEEE Piscataway, NJ, USA ISBN: 978-1-4244-0930-3**

- KATAGIRI ET AL: "Fabrication of silica-core photonic bandgap fiber with multilayer cladding" OPTICAL FIBER COMMUNICATION CONFERENCE, 2004. OFC 2004 LOS ANGELES, CA, USA FEB. 23-25, 2004, PISCATAWAY, NJ, USA,IEEE, 23 février 2004 (2004-02-23), pages 707-709, XP010744528 ISBN: 1-55752-772-5
- BRECHET F ET AL: "Singlemode propagation into depressed-core-index photonic-bandgap fibre designed for zero-dispersion propagation at short wavelengths" ELECTRONICS LETTERS, IEE STEVENAGE, GB, vol. 36, no. 6, 16 mars 2000 (2000-03-16), pages 514-515, XP006014977 ISSN: 0013-5194
- ALAM I ET AL: "Classification and properties of radiation and guided modes in Bragg fiber" OPTICS COMMUNICATIONS, NORTH-HOLLAND PUBLISHING CO. AMSTERDAM, NL, vol. 250, no. 1-3, 1 juin 2005 (2005-06-01), pages 84-94, XP004892373 ISSN: 0030-4018
- MARCOU J ET AL: "Design of weakly guiding Bragg fibres for chromatic dispersion shifting towards short wavelengths; Design of weakly guiding Bragg fibres for chromatic dispersion shifting towards short wavelengths" JOURNAL OF OPTICS. A, PURE AND APPLIED OPTICS, INSTITUTE OF PHYSICS PUBLISHING, BRISTOL,, GB, vol. 3, no. 6, 1 novembre 2001 (2001-11-01), pages S144-S153, XP020080817 ISSN: 1464-4258
- FEVRIER S ET AL: "Ytterbium-doped fibre lasers with tailored all-solid microstructured cladding" PROCEEDINGS OF SPIE - THE INTERNATIONAL SOCIETY FOR OPTICAL ENGINEERING - PHOTONIC CRYSTAL FIBERS II 2008 SPIE US, vol. 6990, avril 2008 (2008-04), pages 69900M-1-69900M-9, XP002534850

## Description

La présente invention se rapporte à un dispositif comprenant une fibre optique à base de silice contenant des terres rares comme dopant, pour émettre un signal ou un signal amplifié situé dans le domaine de longueurs d'onde dit en bande "S" (pour "Short Band" en anglais), c'est à dire correspondant à des longueurs d'onde inférieures à environ 1530 nm.

L'invention concerne les dispositifs qui utilisent une fibre optique dopées de terres rares pour émettre ou amplifier un signal lumineux. Les amplificateurs à fibre optique comportent une fibre amplificatrice qui fonctionne sur le principe dit de l'émission stimulée, selon lequel un matériau peut émettre une onde lumineuse de même longueur d'onde et de même phase que l'onde lumineuse transmise et cela par excitation dudit matériau au moyen d'une source lumineuse de grande énergie, tel qu'un laser de pompe, dont la longueur d'onde est inférieure à celle du signal transmis dans la fibre. Les principaux éléments amplificateurs utilisés sont habituellement des terres rares, tel que l'erbium ou l'ytterbium par exemple, et sont généralement intégrés comme dopants dans le coeur monomode ou au voisinage de ce coeur monomode de la fibre Le signal de pompe crée une inversion de population et permet ainsi de rendre ces ions actifs. Dans le cas où la fibre amplificatrice est insérée dans une cavité optique, on peut réaliser un laser pour émettre un signal lumineux.

De manière connue, on cherche à accroître les performances des amplificateurs optiques à fibre dopée à l'erbium. Ces amplificateurs dits "EDFA" (pour "Erbium Doped Fiber Amplifier" en anglais) sont généralement utilisés le long des liaisons optiques à longue distance pour amplifier des signaux multiplexés en longueur d'onde.

Ces amplificateurs EDFA comprennent une fibre optique dont le coeur ou la zone au voisinage du coeur est dopé à l'erbium qui fournit une transition amplificatrice à la longueur d'onde de 1550 nm. Les fibres sont conçues pour obtenir une amplification la plus efficace possible dans le domaine des longueurs d'onde appelés la bande "C" (pour "Conventional Band" en anglais) qui correspond à des longueurs d'onde entre 1530 nm à 1565 nm, et la bande "L" (pour "Large Band" en anglais) qui correspond à des longueurs d'onde situées entre 1565 nm et 1625 nm.

Le problème se pose alors de l'amplification des signaux dont la longueur d'onde est inférieure à ces valeurs, ce qui correspondant au domaine dit de bande S dont les longueurs d'onde sont comprises entre 1450 nm et 1530 nm. L'amplification dans cette bande de longueur d'onde présente le grand intérêt de permettre d'augmenter la capacité de transmission des systèmes optiques.

Il est possible de réaliser des amplificateurs de type TDFA dope au thulium capables d'amplifier dans la bande S. Cependant ces amplificateurs présentent l'inconvénient de ne pouvoir être utilisés qu'avec des fibres à base de fluor. Ces fibres ne peuvent pas être raccordées à des fibres conventionnelles à base de silice.

Il est aussi possible de réaliser des amplificateurs de type EDFA avec des fibres à base de silice en introduisant des pertes pour des longueurs d'ondes situées autour et au-dessus de 1530 nm, afin de favoriser le gain en-dessous de 1530 nm. Ces pertes peuvent être obtenues de deux façons.

D'une part on peut couper la fibre dopée à l'erbium et insérer un réseau de Bragg entre les deux parties obtenues. Toutefois les pertes doivent être réparties sur toute la longueur de la fibre amplificatrice, ce qui nécessite d'utiliser plusieurs réseaux de Bragg et donc de réaliser plusieurs coupures de la fibre. Cette solution est notamment décrite dans un article de H. ONO et al. intitulé "S-Band erbium doped fiber amplifiers with a multistage configuration-design, characterization, and gain tilt compensation" (IEEE Jnl. of Lightwave Techn. 2003, 21(10), 2240-2246). Cette solution est coûteuse, compliquée et peu efficace.

D'autre part, le document US-6,970,631 propose d'adapter l'indice de réfraction de la fibre dopée à l'erbium pour produire une perte importante au-dessus de 1530 nm. Cette solution consiste notamment à adopter un profil en W de l'indice de réfraction de la fibre Bien que cette solution donne une amplification dans la bande S, le gain obtenu n'est pas plat. En effet ce profil d'indice particulier permet une résonnance en mode de gain qui provoque des pertes au centre de la bande S. Pour éviter cette résonnance en mode de gain, il est possible de doper la gaine optique avec un élément absorbant, mais dans ce cas la largeur de bande de gain dans la bande S devient très limitée.

VIALE ET AL: "Modal properties of solid-core photonic bandgap fibers", PHOTONICS AND NANOSTRUCTURES, ELSEVIER, AMSTERDAM, NL, vol. 4, no. 2, mai 2006 (2006-05), pages 116-122, décrit une fibre optique de Bragg à bande interdite photonique comprenant un coeur solide constitué d'un verre de silice, qui peut être dopé par les terres rares, avec un indice de réfraction $n_1$, entouré d'une gaine optique comprenant des couples de couches en silice, chaque couple composé d'une première couche interne d'indice de réfraction $n_2$ supérieur à l'indice de réfraction $n_1$ du coeur, recouverte d'une deuxième couche externe avec un indice de réfraction $n_3$, l'indice de réfraction $n_3$ de la couche externe étant inférieur à l'indice de réfraction $n_2$ de la couche interne du couple. Selon un exemple, la fibre optique comprend six couples de couches autour du coeur, chaque couple comprenant une couche interne d'indice de réfraction $n_2$ et une couche externe d'indice de réfraction $n_3$, l'indice de réfraction $n_3$ de la couche externe étant inférieur à l'indice de réfraction $n_2$ de la couche interne du même couple.

Le document US-7,079.309 concerne un amplificateur optique dans lequel un cristal photonique est utilisé pour contrôler le profil de gain. Le cristal comprend une structure périodique diélectrique ayant un effet de bande interdite photonique (PBG pour "Photonic Band Gap" en anglais). La structure tridimensionnelle est composée de barreaux à base de silicium dopé avec des ions erbium. La structure diélectrique périodique comprend une pluralité de défauts de type microcavités.

Cependant la bande interdite photonique selon ce document est telle que des résonnances des cavités vont permettre de réduire l'excursion naturelle du gain en bande C.

La présente invention a pour but d'éliminer les inconvénients de l'art antérieur, et en particulier de proposer un dispositif permettant de produire ou d'amplifier un signal sur au moins la majeure partie de la bande S.

L'invention a aussi pour but de proposer un dispositif facile à réaliser, efficace et peu coûteux.

L'invention a encore pour but de produire une amplification dans la bande S présentant un gain relativement plat

L'objet de la présente invention est un dispositif comportant une fibre optique à bande interdite photonique comprenant un coeur plein constitué d'un verre de silice dopé de terre rare d'indice de réfraction $n_c$, entouré d'une gaine optique comprenant N couples de couches en silice autour du coeur, où N est un entier supérieur à 2, chaque couple étant composé d'une première couche interne d'épaisseur d, et d'indice de réfraction $n_i$ supérieur à l'indice de réfraction $n_c$ du coeur, recouverte d'une deuxième couche externe d'épaisseur $d_e$ et d'indice de réfraction $n_e$, l'indice de réfraction $n_e$ de la couche externe étant inférieur à l'indice de réfraction $n_i$ de la couche interne du même couple.

La fibre optique est une fibre optique à bande interdite photonique apte à amplifier un signal en bande S et apte à créer de fortes pertes de propagation dans le domaine de longueur d'onde appartenant aux bandes C et L pour autoriser l'amplification du signal en bande S et le dispositif la comprenant est un dispositif d'amplification et d'émission en bande S.

Le principe général de l'invention consiste à créer des pertes à certaines longueur d'onde à l'aide d'une fibre à bande interdite photonique à coeur plein solide contenant un dopant qui est une terre rare. La fibre est de préférence monomode avec un coeur en verre de silice dopé de terre rare. Le dopant terre rare est de préférence choisi parmi l'erbium, l'ytterbium, et le néodyme. Ceci permet de créer sur toute la longueur de la fibre des pertes de propagation du signal aux longueurs d'onde où le gain de l'ion dopant est important, par exemple autour de 1525 nm pour l'ion erbium. Ces pertes permettent de favoriser des zones spectrales où le gain apporté par l'ion de terre rare est moins important, par exemple entre environ 1490 nm et 1520 nm pour l'ion erbium. Dans le cas des ions néodyme, des pertes sont créées dans la zone spectrale de 1020 nm à 1070 nm. Dans le cas des ions ytterbium, des pertes sont créées dans ta zone spectrale de 1050-1100nm

Selon un mode de réalisation avantageux, l'épaisseur $d_e$ de la couche externe est supérieure à l'épaisseur di de la couche interne pour un même couple.

Selon une forme d'exécution de l'invention, les épaisseurs des couches internes sont égales.

Selon une autre forme d'exécution de l'invention, les épaisseurs des couches externes sont égales.

De préférence, l'épaisseur de la couche externe est égale au moins au double de l'paisseur de la couche interne.

Selon un mode de réalisation particulier, le dopant terre rare est dispersée sous forme d'ions ou de nanoparticules dans au moins une partie du coeur, c'est-à-dire qu'il peut être dispersé dans la totalité du coeur monomode ou seulement dans une partie. Le plus souvent, les espèces actives dispersées dans la fibre de silice le sont sous la forme d'ions trivalents. Les nanoparticules de dopant ont une taille qui dépend des pertes acceptées, de la concentration de terre rare souhaitée et de la composition de la nanoparticules. Cette taille est typiquement comprise entre 2nm et 20nm.

Les ions de terre rare peuvent être vus comme des systèmes à 4 niveaux dans certaines gamme de longueurs d'onde et des systèmes à 3 niveaux pour des longueurs d'onde inférieures. On sait obtenir une inversion suffisante dans le système à trois niveaux pour permettre d'obtenir un gain (ou un coefficient d'émission) important. Cependant cette inversion permet également un gain (ou un coefficient d'émission) bien plus important dans le système à 4 niveaux pour des longueurs d'onde plus élevées, prohibant ainsi le gain du système à trois niveaux. L'invention en créant des pertes sélectivement dans le système à 4 niveaux permet ainsi de réaliser un amplificateur ou un laser dans le système à 3 niveaux,

Avec une fibre dopée à l'ytterbium, on peut selon l'invention créer des pertes autour de 1100 nm et favoriser le gain autour de 980 nm, et réaliser ainsi un dispositif pour l'émission (tel qu'un laser) ou l'amplification (tel qu'un amplificateur) autour de 980 nm. Avec une fibre dopée au néodyme, on peut de même créer des pertes autour de 1050 nm et favoriser le gain autour de 9-15 nm, et réaliser ainsi un amplificateur ou un laser fonctionnant autour de 915 nm.

Le coeur peut en outre être dopé par d'autres dopant tels que l'aluminium Al, le germanium Ge, le phosphore P et/ou le fluor F afin de permettre d'ajuster l'indice du coeur par rapport à l'indice de la gaine. Le dopant peut être introduit dans la matrice de silice sous la forme d'ions ou de nanoparticules. Les couches externes de faible indice peuvent être constituées de silice non-dopée ou de silice dopée par Ge, P et/ou F. Les couches internes de fort indice peuvent être constituées de silice dopée par Ge et/ou P.

Selon un mode de réalisation de l'invention, les indices de réfraction des couches internes sont égaux.

Selon un autre mode de réalisation, les indices de réfraction des couches externes sont égaux.

Selon encore un autre mode de réalisation, les indices de réfraction des couches externes sont égaux à l'indice du coeur.

La gaine d'indice périodiquement haut et bas provoque, pour certains rayonnements de longueur d'onde spécifique provenant du coeur, une réflexion distribuée. Ces longueurs d'onde spécifiques appartiennent à une bande interdite photonique de la gaine. Des rayonnements de longueur d'onde n'appartenant pas à la bande interdite ne sont pas guidés dans le coeur de la fibre, mais fuient dans la gaine. La longueur d'onde centrale de la bande interdite dépend directement des épaisseurs des couches constituant la gaine au travers de la relation $\frac{2\pi}{\lambda} d \sqrt{n^2 - n_{ef}^2} = \frac{\pi}{2}$ où d est l'épaisseur et n est l'indice de la couche considérée, $n_{ef}$ est l'indice effectif du mode guidé dans le coeur et $\lambda$ est la longueur d'onde centrale.

Selon l'invention, la fibre optique comprend N couples de couches, chaque couple comprenant une couche interne et une couche externe. Le nombre N de couples dans la fibre selon l'invention est au moins égal à 2. Selon une variante préférée de réalisation, le nombre N de couples de couches est au moins égal à 5.

Selon une autre variante, le rayon r de la fibre est au moins égal au double du rayon R du coeur.

Une fibre optique selon la présente invention possède des propriétés de guidage à bande interdite photonique conçue de telle sorte qu'elle contrarie le gain de terre rare dans la bande d'amplification traditionnelle, dite bande C, afin de permettre l'amplification dans la bande de courte longueur d'onde, dite bande S. Bien entendu, le niveau d'atténuation aux longueurs non désirées obtenu avec la structure de bande interdite photonique (PBG) doit être d'un ordre de grandeur suffisant pour permettre d'atténuer le gain d'amplification à ces longueurs d'onde. Cette invention permet d'obtenir un gain beaucoup plus plat dans la bande S que les solutions antérieures.

La présente invention a aussi comme avantage que la fibre peut être aisément fabriquée par un procédé industriel, notamment par un procédé "MCVD" (pour "Modified Chemical Vapor Déposition" en anglais).

D'autres caractéristiques et avantages de la présente invention apparaîtront à la lecture de la description qui suit d'un mode de réalisation, donné bien entendu à titre illustratif et non limitatif, et dans le dessin annexé sur lequel

- la figure 1 est une vue en coupe d'une fibre selon un mode de réalisation de l'invention,
- la figure 2 représente le profil de l'indice de réfraction selon un rayon de la fibre,
- la figure 3 montre, en fonction de la longueur d'onde $\lambda$ en $\mu$m portée en abscisse, la variation des pertes de propagation P dans la fibre en dB/km,
- la figure 4 montre le profil des pertes en propagation P comparé aux coefficients d'absorption $\alpha$ et d'émission g* de l'erbium, le profil des pertes P, le coefficient d'absorption $\alpha$ et le coefficient d'émission g* en dB/km sont donnés en ordonnée et en abscisse la longueur d'onde $\lambda$ en nm.
- la figure 5 montre le gain obtenu avec la fibre de la figure 2. le gain G en dB est donné en ordonnée et en abscisse la longueur d'onde $\lambda$ en nm.

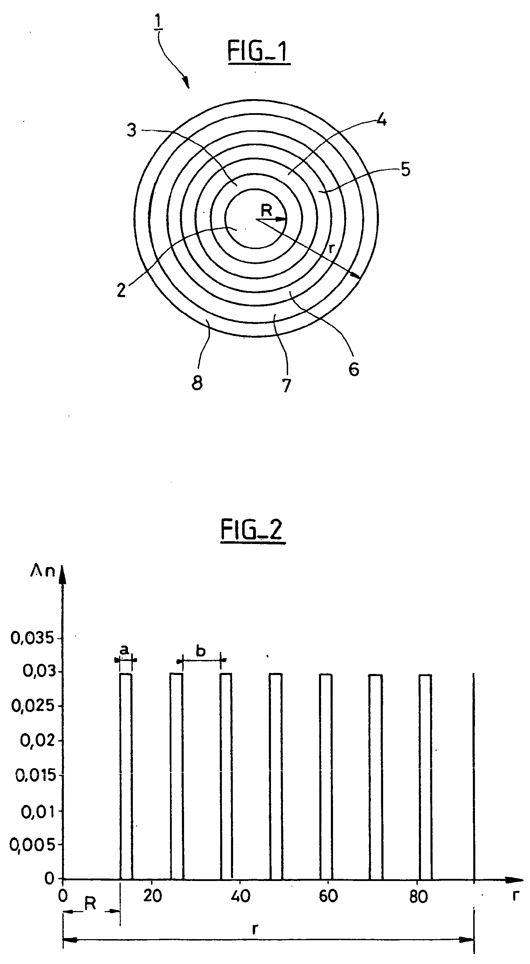

Une fibre optique monomode selon un mode de réalisation de l'invention, ayant un coeur plein dopé aux terres rares et possédant des propriétés de guidage à bande interdite photonique, est représentée en coupe sur la figure 1. La fibre 1 de rayon r comprend une coeur plein 2 de rayon R et d'indice de réfraction $n_c$. constitué de silice dopée par des ions ou des nanoparticules d'erbium. Le coeur 2 est entouré d'une gaine optique comportant un premier couple de couches composé d'une première couche 3 également en silice et ayant un indice de réfraction $n_1$ strictement supérieur à celui du coeur, tel que $n_1 > n_c$, et d'une seconde couche 4 en silice dopée et ayant un indice de réfraction $n_2$ inférieur à celui de la première couche, tel que $n_2 < n_1$. La gaine comporte aussi un deuxième couple de couches de même nature, entourant le premier couple et analogue au premier couple, composé d'une première couche 5 d'indice de réfraction $n_3$ tel que $n_3 > n_c$, et d'une seconde couche 6 d'indice de réfraction $n_4$ tel que $n_4 < n_3$. Dans l'exemple donné ici, la gaine comporte aussi un troisième couple de couches, entourant le deuxième couple et analogue au premier et deuxième couples, composé d'une première couche 7 d'indice de réfraction $n_5$ tel que $n_5 > n_c$, et d'une seconde couche 8 d'indice de réfraction $n_6$ tel que $n_6 \leq n_5$. La fibre peut en outre être recouverte d'un revêtement protecteur en matériau polymère non représenté. De préférence on choisit un polymère de faible indice.

Dans le mode de réalisation de l'invention illustré sur la figure 2, la fibre optique de rayon r comporte une gaine optique multiple composée de sept couples de couches analogues. On retrouve le coeur ayant un rayon R = 12,7$\mu$m et d'indice de réfraction $n_c$. Le coeur est entouré d'une première couche d'épaisseur a = 2,5$\mu$m et d'indice de réfraction $n_1$ tel que $n_1 - n_c = \Delta n$ avec ici $\Delta n = 0,03$. La première couche est suivie d'une deuxième couche d'épaisseur b = 8,5$\mu$m et d'indice de réfraction $n_2$ ici tel que $n_2 = n_c$. Les couches suivantes se succèdent de manière analogue en respectant l'alternance de couches de haut indice et des couches de bas indice de réfraction et leurs épaisseurs respectives.

Les fibres optiques selon un mode de réalisation de l'invention ont un comportement particulier en propagation qui dépend du nombre total de couches, de leur indice de réfraction et de leur épaisseur. Les valeurs des paramètres a, b, N et $\Delta n$ peuvent être modifiées sous réserve d'ajustement du diamètre extérieur OD de la fibre optique lors de l'étirage de la préforme.

On donne dans le tableau ci-dessous, pour quelques exemples de variation relative de la valeur de l'un des paramètres a, b, N et Δn, les variations relatives δOD du diamètre extérieur OD qui sont nécessaires pour retrouver les conditions de propagation initiales.

Tableau I

| (a) | | (b) | | (c) | | (d) | |
|---|---|---|---|---|---|---|---|
| $\delta N$ | $\delta OD$, % | $\delta a$, % | $\delta OD$, % | $\delta b$, % | $\delta OD$, % | $\delta \Delta n$, % | $\delta OD$, % |
| -1 | 2 | 4 | 1,3 | -1,12 | 2 | -17 | 14 |
| -2 | 4,5 | 8 | 2,2 | 1,12 | 4 | 17 | -3,5 |

Par exemple, si on diminue de 1 le nombre de couches: δN = -1, le diamètre extérieur OD devra augmenter de 2% : δOD = +2% pour que le résultat reste inchangé.

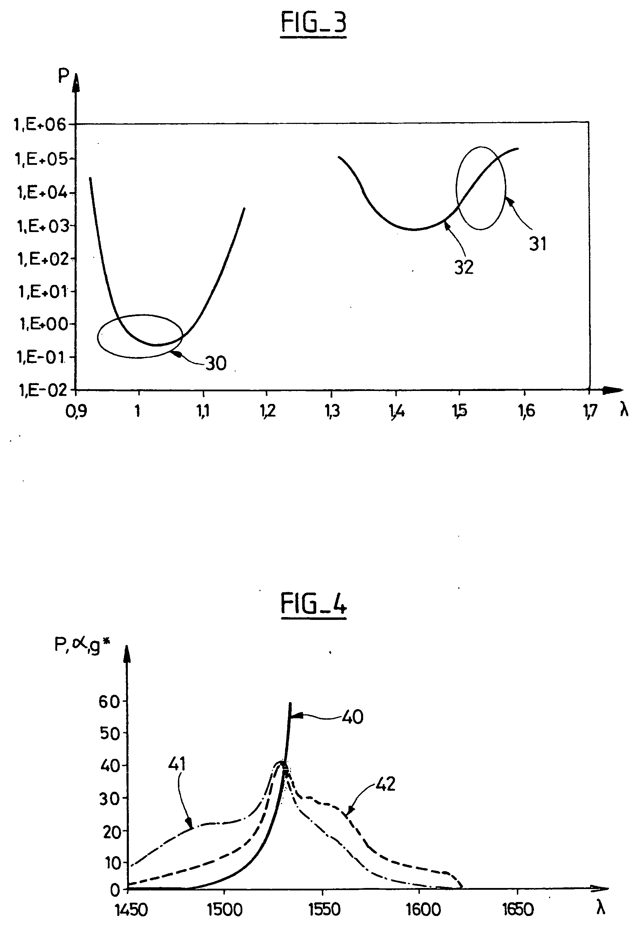

Un exemple de perte de propagation P du signal en fonction de la longueur d'onde λ, dans une fibre telle que décrite précédemment, est donné sur la figure 3. La variation spectrale des pertes de propagation montre une valeur faible des pertes à la longueur d'onde d'émission du laser de pompe (λ = 980 nm) (zone 30) et une valeur forte des pertes aux longueurs d'onde supérieures à λ = 1530 nm (zone 31). On observe qu'aux longueurs d'onde appartenant à la bande S ciblée, c'est-à-dire entre environ 1450 nm et 1530 nm, la valeur des pertes de propagation est relativement faible (zone 32).

On rappelle que le principe général de l'invention consiste à créer des pertes à certaines longueurs d'onde à l'aide d'une fibre à bande interdite photonique à coeur plein dopée avec des terres rares. Dans cet exemple, le rayonnement de pompe sera correctement propagé dans la fibre, et le signal en bandes C et L sera fortement atténué ce qui autorisera l'amplification du signal en bande S.

On considère maintenant la figure 4 qui montre la variation du profil des pertes de propagation P (courbe 40), du coefficient d'absorption de l'erbium α (courbe 41) et du coefficient d'émission g* de l'erbium (courbe 42) en fonction de la longueur d'onde λ du signal.

Aux longueurs d'onde très supérieures à 1530 nm, en l'absence de pertes de propagation P (courbe 40), le coefficient d'émission g* (courbe 42) est supérieur au coefficient d'absorption α (courbe 41). Dans cet exemple, tes pertes induites par la bande ïnterdite photonique (PBG) sont supérieures au coefficient d'émission g* aux longueurs d'onde situées au-dessus de 1530nm, et pour les longueurs d'onde située en-dessous de 1520nm, les pertes sont inférieures au coefficient d'émission g*.

Un amplificateur EDFA par exemple amplifiera correctement et principalement les signaux en bandes C et L. Afin d'amplifier correctement et principalement les signaux en bande S, c'est-à-dire aux longueurs d'onde inférieures à 1530 nm, l'application de pertes de propagation P (courbe 40) est nécessaire. Ces pertes sont très élevées aux longueurs d'onde autour et juste au-dessus de 1530 nm, et interdisent l'amplification à ces longueurs d'onde. Du gain est alors disponible en bande S.

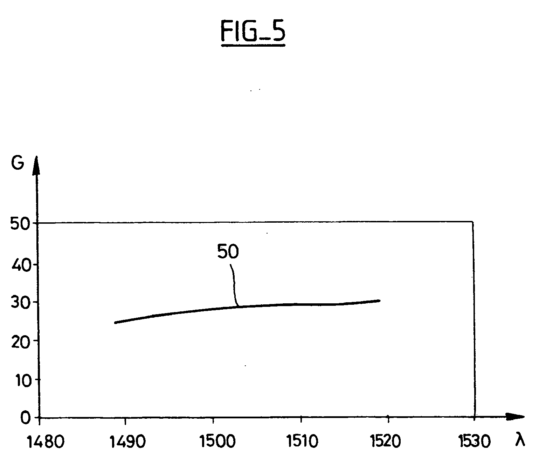

Sur la figure 5. on a représente l'évolution du gain G obtenu avec le dispositif d'amplification précédemment décrit en fonction de la longueur d'onde λ du signal. La courbe 50 montre un gain relativement élevé pour des longueurs d'onde λ inférieures à 1520 nm, ce qui montre l'apport du dispositif d'amplification selon l'invention. De plus, la courbe 50 de gain est plate, c'est-à-dire que le gain est relativement constant en fonction de la longueur d'onde. Ceci est une caractéristique inhérente du dispositif d'amplification selon l'invention, qui pourra être avantageusement utilisée dans d'autres applications.

Précédemment on a décrit à titre illustratif un dispositif d'amplification en bande S. Bien entendu le même principe et la même fibre sont utilisé pour réaliser un dispositif d'émission tel qu'un laser émettant dans cette même bande S.

**Revendications**

1. Dispositif comportant une fibre optique (1) comprenant un coeur (2) plein constitué d'un verre de silice dopé de terre rare d'indice de réfraction $n_c$, entouré d'une gaine optique comprenant N couples de couches en silice autour du coeur, où N est un entier supérieur à 2, chaque couple étant composé d'une première couche interne (3, 5, 7) d'épaisseur $d_i$ et d'indice de réfraction $n_i$ supérieur à l'indice de réfraction $n_c$ du coeur, recouverte d'une deuxième couche externe (4,6,8) d'épaisseur de et d'indice de réfraction $n_e$, l'indice de réfraction $n_e$ de la couche externe (4, 6, 8) étant inférieur à l'indice de réfraction $n_i$ de la couche interne (3, 5, 7) du même couple, **caractérisé en ce que** la fibre optique (1) est une fibre optique à bande interdite photonique apte à amplifier un signal en bande S et apte à créer de fortes pertes de propagation dans le domaine de longueur d'onde appartenant aux bandes C et L pour autoriser l'amplification du signal en bande S et **en ce que** le dispositif la comprenant est un dispositif d'amplification et d'émission en bande S.

2. Dispositif selon la revendication 1, dans lequel l'épaisseur de de la couche externe (4, 6, 8) est supérieure à l'épaisseur di de la couche interne (3, 5, 7) pour un même couple

3. Dispositif selon la revendication 2, dans lequel l'épaisseur de de la couche externe (4, 6, 8) est le double de l'épaisseur di de la couche interne (3, 5, 7).

4. Dispositif selon l'une des revendications 1 à 3, dans lequel le coeur (2) est constitué d'un verre de silice dopé de terre rare choisie parmi l'erbium, l'ytterbium, et le néodyme.

5. Dispositif selon la revendication 4, dans lequel la terre rare est dispersée dans au moins une partie du coeur (2).

6. Dispositif selon l'une des revendications précédentes, dans lequel les indices de réfraction des couches internes (3, 5, 7) sont égaux.

7. Dispositif selon l'une des revendications précédentes, dans lequel les indices de réfraction des couches externes (4, 6, 8) sont égaux.

8. Dispositif selon la revendication 7, dans lequel les indices de réfraction des couches externes (4, 6, 8) sont égaux à l'indice du coeur (2).

9. Dispositif selon l'une des revendications précédentes, dans lequel le nombre N de couples de couches est au moins égal à 5.

10. Dispositif selon l'une des revendications précédentes, dans lequel le rayon r de la fibre (1) est au moins égal au double du rayon R du coeur (2).

**Patentansprüche**

1. Vorrichtung, eine optische Faser (1) umfassend, die einen gefüllten Kern (2) umfasst, bestehend aus mit Seltenerdelementen dotiertem Quarzglas mit Brechungsindex $n_c$, umgeben von einem optischen Ummantelung, die N Paare von Schichten aus Siliciumdioxid rund um den Kern umfasst, wobei N eine ganze Zahl größer 2 ist, wobei sich jedes Paar aus einer ersten, inneren Schicht (3, 5, 7) der Stärke $d_i$ und mit Brechungsindex $n_i$ größer als Brechungsindex $n_e$ des Kerns zusammensetzt, die überzogen ist mit einer zweiten, äußeren Schicht (4, 6, 8) der Stärke $d_e$ und mit Brechungsindex $n_e$, wobei der Brechungsindex $n_e$ der äußeren Schicht (4, 6, 8) niedriger ist als der Brechungsindex $n_i$ der inneren Schicht (3, 5, 7) desselben Paars, **dadurch gekennzeichnet, dass** die optische Faser (1) eine optische Faser mit photonischer Bandlücke ist, ausgelegt für das Verstärken eines Signals in Band S und ausgelegt für das Verursachen starker Ausbreitungsverluste im Bereich der den Bändern C und L entsprechenden Wellenlängen zum Zulassen der Verstärkung des Signals in Band S, sowie **dadurch gekennzeichnet, dass** die besagte optische Faser umfassende Vorrichtung eine Verstärkungs- und Sendevorrichtung für Band S ist.

2. Vorrichtung nach Anspruch 1, wobei bei ein und demselben Paar die Stärke $d_e$ der äußeren Schicht (4, 6, 8) größer ist als die Stärke $d_i$ der inneren Schicht (3, 5, 7).

3. Vorrichtung nach Anspruch 2, wobei die Stärke $d_e$ der äußeren Schicht (4, 6, 8) doppelt so groß ist wie die Stärke $d_i$ der inneren Schicht (3, 5, 7).

4. Vorrichtung nach einem jeglichen der Ansprüche 1 bis 3, wobei der Kern (2) aus Quarzglas besteht, das mit Seltenerdelementen dotiert ist, bei denen es sich entweder um Erbium, Ytterbium oder Neodym handelt.

5. Vorrichtung nach Anspruch 4, wobei die Seltenerdelemente in mindestens einem Bereich des Kerns verstreut sind.

6. Vorrichtung nach einem jeglichen der vorgenannten Ansprüche, wobei die Brechungsindizes der inneren Schichten (3, 5, 7) identisch sind.

**7.** Vorrichtung nach einem jeglichen der vorgenannten Ansprüche, wobei die Brechungsindizes der äußeren Schichten (4, 6, 8) identisch sind.

**8.** Vorrichtung nach Anspruch 7, wobei die Brechungsindizes der äußeren Schichten (4, 6, 8) identisch mit dem Brechungsindex des Kerns (2) sind.

**9.** Vorrichtung nach einem jeglichen der vorgenannten Ansprüche, wobei die Anzahl N der Schichtenpaare mindestens gleich 5 ist.

**10.** Vorrichtung nach einem jeglichen der vorgenannten Ansprüche, wobei der Radius r der Faser (1) mindestens dem Doppelten des Radius R des Kerns (2) entspricht.

**Claims**

**1.** A device including an optical fibre (1) comprising a solid core (2) made of a rare-earth-doped silica glass and of refractive index $n_c$, surrounded by optical cladding comprising N pairs of silica layers around the core, where N is an integer greater than 2, each pair being made up of an inner first layer (3, 5, 7) of thickness $d_i$ and of refractive index $n_i$ greater than the refractive index $n_c$ of the core, and of an outer second layer (4, 6, 8) of thickness $d_e$ and of refractive index $n_e$, and covering said inner first layer, the refractive index $n_e$ of the outer layer (4, 6, 8) being less than the refractive index $n_i$ of the inner layer (3, 5, 7) in the same pair, said device being **characterized in that** the optical fibre (1) is a photonic bandgap optical fibre suitable for amplifying an S-band signal and suitable for generating high propagation losses in the wavelength domain belonging to the C and L bands so as to allow the S-band signal to be amplified, and **in that** the device including said optical fibre is an S-band amplification and transmission device.

**2.** A device according to claim 1, wherein the thickness $d_e$ of the outer layer (4, 6, 8) is greater than the thickness $d_i$ of the inner layer (3, 5, 7) for the same pair.

**3.** A device according to claim 2, wherein the thickness $d_e$ of the outer layer (4, 6, 8) is twice the thickness $d_i$ of the inner layer (3, 5, 7).

**4.** A device according to any one of claims 1 to 3, wherein the core (2) is made of a rare-earth-doped silica glass fibre doped with a rare earth chosen from among erbium, ytterbium, and neodymium.

**5.** A device according to claim 4, wherein the rare earth is dispersed through at least a portion of the core (2).

**6.** A device according to any preceding claim, wherein the refractive indices of the inner layers (3, 5, 7) are mutually equal.

**7.** A device according to any preceding claim, wherein the refractive indices of the outer layers (4, 6, 8) are mutually equal.

**8.** A device according to claim 7, wherein the refractive indices of the outer layers (4, 6, 8) are equal to the refractive index of the core (2).

**9.** A device according to any preceding claim, wherein the number N of pairs of layers is not less than 5.

**10.** A device according to any preceding claim, wherein the radius r of the fibre (1) is at least twice the radius R of the core (2).

## FIG_1

## FIG_2

## FIG_3

## FIG_4

FIG_5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6970631 B

- US 7079309 B

**Littérature non-brevet citée dans la description**

- **H. ONO et al.** S-Band erbium doped fiber amplifiers with a multistage configuration-design, characterization, and gain tilt compensation. *IEEE Jnl. of Lightwave Techn,* 2003, vol. 21 (10), 2240-2246

- Modal properties of solid-core photonic bandgap fibers. **VIALE et al.** PHOTONICS AND NANOSTRUCTURES. ELSEVIER, Mai 2006, vol. 4, 116-122